# EUROPÄISCHE PATENTANMELDUNG

(11) **EP 1 744 431 A2**
(43) Veröffentlichungstag der Anmeldung: **17.01.2007**
(21) Anmeldenummer: 06010786.9
(22) Anmeldetag: 26.05.2006
(51) Int. Cl.: H02H 7/08

(54) **Schalter für dreiphasigen Asynchronmotor**

(30) Priorität: 11.07.2005 DE 102005032562
(71) Anmelder: Klinger & Born GmbH, 64395 Brensbach (DE)
(72) Erfinder: Treusch, Volker, 64407 Fränkisch-Crumbach (DE)
(74) Vertreter: Katscher Habermann Patentanwälte

(57) **Zusammenfassung**

Ein Schalter ist für einen in Sternschaltung betriebenen, dreiphasigen Asynchronmotor (1) mit drei Motorspulen bestimmt. Hierbei ist mindestens eine zusätzliche Ausschaltfunktion vorgesehen, wie ein oder mehrere Thermokontakte (7,8), Endschalter (9) oder Not-AusSchalter, die in Reihe mit einer Magnetspule (10) eines Schaltschützes (2) und einem Schaltkontakt des Schaltschützes zwischen einem Sternpunktabgriff (11) des Asynchronmotors (1) und einer der Netzphasen liegen. Eine (L3) der Netzphasen (L1, L2, L3) ist ohne Unterbrechung durch das Schaltschütz (2) unmittelbar mit einer der Motorspulen (6) verbunden.

## Beschreibung

Die Erfindung betrifft einen Schalter für einen in Sternschaltung betriebenen, dreiphasigen Asynchronmotor mit drei Motorspulen, mit mindestens einer zusätzlichen Ausschaltfunktion wie einem oder mehreren Thermokontakten, Endschalter oder Not-Aus-Schalter, die in Reihe mit einer Einschaltwicklung eines Schaltschützes und einem Schaltkontakt des Schaltschützes zwischen einem Sternpunktabgriff des Asynchronmotors und einer der Netzphasen liegen.

Bei diesen bekannten Schalten für Asynchronmotoren wird für die Thermokontakte, Endschalter und/oder Not-Aus-Schalter kein gesonderter Nullleiter benötigt, da der Sternpunktabgriff im Mittelpunkt des in Sternschaltung betriebenen Asynchronmotors bereits ein Nullpotential generiert. Hierbei kann der Schalter aber nur für mechanische Betätigung ausgelegt werden. Eine Auslegung für elektrische Einschaltung ist nicht möglich, da der Sternpunktabgriff im ausgeschalteten Zustand des Motors spannungslos ist. Die Einschaltwicklung des Schaltschützes kann daher nicht elektrisch aktiviert werden.

Bekannt sind auch Ausführungen mit potentialfreien Abgriffen an den Thermokontakten in den Motoren, um beispielsweise Endschalter oder Not-Aus-Funktionen zu realisieren. Der hierfür erforderliche Bauaufwand ist jedoch verhältnismäßig hoch.

Daneben sind auch Lösungen mit dreipolig geschaltetem Motor bekannt. Diese werden jedoch in der Praxis nicht eingesetzt, da zum Einschalten zwei elektrische Kontakte benötigt werden. Hierbei muss ein Kontakt sogar als Lastkontakt ausgeführt werden, da dieser beim Einschalten parallel zum Schaltkontakt des Schaltschützes liegt und somit den Einschaltstrom führen muss.

Aufgabe der Erfindung ist es daher, einen Schalter für dreiphasige Asynchronmotoren der eingangs genannten Gattung so auszubilden, dass mit geringem Bauaufwand und somit geringem Kostenaufwand auch eine Ausführung mit elektrischer Einschaltung des Schaltschützes ermöglicht wird.

Diese Aufgabe wird erfindungsgemäß dadurch gelöst, dass eine der Netzphasen ohne Unterbrechung durch das Schaltschütz unmittelbar mit einer der Motorspulen verbunden ist.

Zwei Netzphasen werden über Schließerkontakte des Schaltschützes auf die Motorwicklung geschaltet. Eine Netzphase wird unmittelbar an eine Motorspule angelegt. Im ausgeschalteten Zustand hat diese eine anliegende Netzphase keine Wirkung. Wird nun der Schaltschütz entweder elektrisch oder mechanisch eingeschaltet, so startet der Asynchronmotor. Dabei liegt über der Wicklung an einer Seite der Magnetspule eine der Netzphasen an. An der anderen Seite wird über die Einschaltwicklung des elektrischen Einschaltkontaktes eine zweite Netzphase aufgeschaltet. Hierbei liegen im Einschaltmoment kurzzeitig 400 V an der für eine Normalspannung von 230 V ausgelegten Magnetspule. Nach kurzer Zeit wird im Mittelpunkt des Asynchronmotors am Sternpunktabgriff Nullpotential generiert; die zunächst mit höherer Anlaufspannung beaufschlagte Magnetspule arbeitet nunmehr in ihrem Arbeitsbereich. Die kurzzeitige Überspannung schädigt bei richtiger Dimensionierung das Magnetsystem nicht.

Ein wesentlicher Vorteil dieser Verschaltung liegt darin, dass zwischen dem Sternpunktabgriff am Mittelpunkt des Asynchronmotors und dem äußeren Abgriff der Motorspule beliebig viele Endschaltgeräte, Not-Aus-Geräte und/oder Thermokontakte des Motors verschaltet werden können, die mit nur einem einzigen elektrischen Einschaltkontakt verschaltet werden.

Obwohl bei dieser Verschaltung eine der Motorspulen ständig mit einer Netzphase in Verbindung bleibt, d.h. durch das Schaltschütz nur eine zweipolige Abschaltung erfolgt, ist dies auch unter Sicherheitsgesichtspunkten zulässig, weil bei einer Schalter-Stecker-Kombination die Hauptschalterfunktion nach der Norm EN 60204 durch den hierbei üblicherweise verwendeten Kragenstecker gegeben ist.

Die Erfindung wird nachfolgend an einem Ausführungsbeispiel näher erläutert.

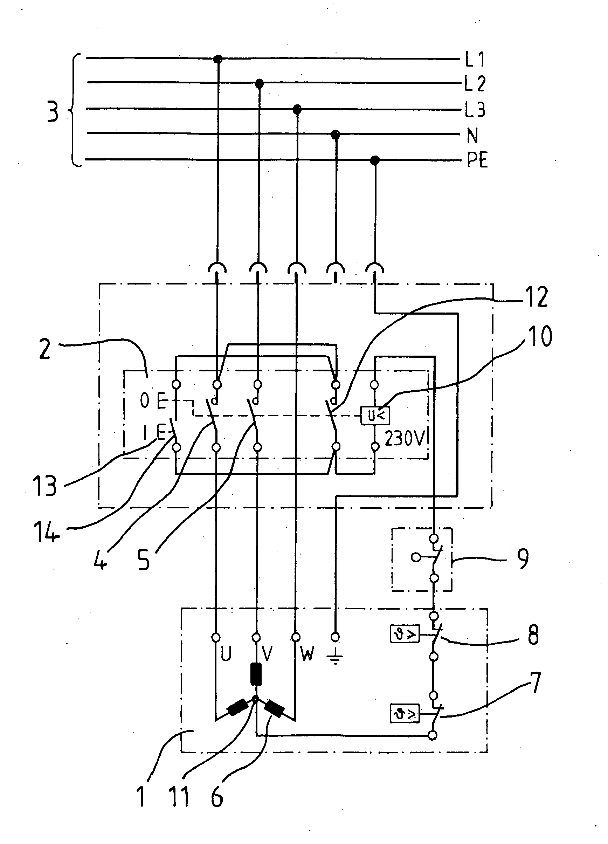

Die Zeichnung zeigt in einem Schaltplan einen dreiphasigen Asynchronmotor 1, der über ein Schaltschütz 2 an ein Dreiphasennetz 3 angeschlossen ist.

Zwei Netzphasen L1 und L2 sind über als Schließerkontakte ausgeführte Schaltkontakte 4 und 5 des Schaltschützes 2 mit den Anschlüssen U und V des Asynchronmotors 1 verbindbar. Die dritte Netzphase L3 ist ohne Unterbrechung durch das Schaltschütz 2 hindurchgeführt und unmittelbar mit dem Anschluss W der einen Motorspule 6 verbunden.

Zwei im Asynchronmotor 1 angeordnete Thermokontakte 7 und 8 sowie ein beispielsweise unabhängig von dem Asynchronmotor 1 und dem Schaltschütz 2 angeordneter Endschalter 9, der beispielsweise auch ein Not-Aus-Schalter sein kann, sind in Reihe mit einer Einschaltwicklung 10 des elektrisch schaltbaren Schaltschützes 2 geschaltet und liegen zwischen einem Sternpunktabgriff 11 im Mittelpunkt des Asynchronmotors 1 und in Reihe mit einem als Schließerkontakt ausgeführten Schaltkontakt 12 des Schaltschützes 1 und der einen Netzphase L1.

Über einen Ein-Taster 13 ist ein Einschaltkontakt 14 betätigbar, der bei zunächst geöffnetem Schließerkontakt 12 die Magnetspule 10 des Schaltschützes 2 an die Netzphase L1 legt. Bei diesem Einschaltvorgang fließt ein Einschaltstrom zwischen der Netzphase L1 über die Magnetspule 10, den geschlossenen Endschalter 9 oder Not-Aus-Schalter und die geschlossenen Thermokontakte 7 und 8 zum Sternpunktabgriff 11 und von dort über die Motorspule 6 zur Netzphase L3. Dadurch zieht der Schaltschütz 2 an; die Schließerkontakte 4,5 und 12 werden ebenfalls geschlossen, so dass der Schaltschütz über den Kontakt 12 in Selbsthaltung geht und alle drei Anschlüsse U, V und W des Asynchronmotors 1 am Netz liegen. Auch andere als die beschriebenen Phasenlagen sind möglich.

Im Einschaltmoment liegen kurzzeitig 400 V an der als 230 V-Spule ausgeführten Magnetspule 10 an. Dadurch wird ein stärkeres Anzugsmoment der Magnetspule erzeugt, was für diese Anwendungen von großem Vorteil ist, da beim Anlauf des Motors in Verbindung mit langen Netzleitungen oder Verlängerungsleitungen hohe Spannungsabfälle verursacht werden, was zu einem Schützflattern und somit zum Ausfall führen kann. Nach kurzer Zeit wird am Sternpunktabgriff 11 Nullpotential generiert, so dass die Magnetspule 10 in ihrem Arbeitsspannungsbereich von 230 V arbeitet.

## Patentansprüche

1. Schalter für einen in Sternschaltung betriebenen, dreiphasigen Asynchronmotor mit drei Motorspulen, mit mindestens einer zusätzlichen Ausschaltfunktion wie einm oder mehreren Thermokontakten, Endschalter oder Not-Aus-Schalter, die in Reihe mit einer Einschaltwicklung eines Schaltschützes und einem Schaltkontakt des Schaltschützes zwischen einem Sternpunktabgriff des Asynchronmotors und einer der Netzphasen liegen, **dadurch gekennzeichnet, dass** eine (L3) der Netzphasen (L1, L2, L3) ohne Unterbrechung durch das Schaltschütz (2) unmittelbar mit einer der Motorspulen (6) verbunden ist.
